(19) Europäisches Patentamt
European Patent Office
Office européen des brevets

(11) **EP 2 243 943 A1**

(12) **DEMANDE DE BREVET EUROPEEN**

(43) Date de publication:
**27.10.2010 Bulletin 2010/43**

(21) Numéro de dépôt: **10305389.8**

(22) Date de dépôt: **14.04.2010**

(51) Int Cl.:
*F02D 41/00* (2006.01)    *F02D 13/02* (2006.01)
*F02M 25/07* (2006.01)

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(30) Priorité: **15.04.2009 FR 0952462**

(71) Demandeur: **Renault S.A.S.**
**92100 Boulogne-Billancourt (FR)**

(72) Inventeur: **Petillon, Yohann**
**78180 Montigny le Bretonneux (FR)**

(54) **Contrôle de l'air frais et des gaz brûlés introduits dans un cylindre d'un moteur à combustion interne**

(57)    Système de contrôle d'un groupe motopropulseur de véhicule automobile équipé d'une boucle (17) de recirculation partielle des gaz d'échappement, d'un moteur (1) à combustion interne muni d'au moins un cylindre (2) comprenant au moins une soupape (3) d'admission et au moins une soupape (4) d'échappement commandées par un actionneur (50) de distribution variable et un moyen (32) pour réguler un débit d'air frais admis dans le moteur, **caractérisé en ce qu**'il comprend un moyen (33) de contrôle de la distribution des gaz pour contrôler l'introduction dans le cylindre d'une masse de gaz d'échappement partiellement recyclés et d'un taux de gaz brûlés résiduels à partir des consignes d'entrée de taux de gaz brûlés résiduels, de débit d'air frais et de masse de gaz d'échappement partiellement recyclés.

FIG.1

EP 2 243 943 A1

**Description**

L'invention concerne le contrôle de l'air frais et des gaz brûlés introduits dans un cylindre d'un moteur à combustion interne.

Plus particulièrement, l'invention concerne les moteurs équipés d'une boucle de recirculation partielle des gaz d'échappement.

Actuellement, les exigences à propos des performances d'un moteur à combustion interne sont croissantes. Les performances des moteurs doivent être suffisamment élevées tout en respectant les normes, de plus en plus sévères, quant aux émissions polluantes dégagées par ces derniers.

Les émissions polluantes d'oxydes d'azote (NOx) dépendent essentiellement de la composition du mélange des gaz introduits dans les cylindres d'un moteur à combustion interne. Afin de limiter ces émissions d'oxydes d'azote, le mélange doit être composé de gaz neutres qui n'entrent pas directement en jeu dans la combustion, mais qui permettent de diluer l'air frais introduit dans les cylindres. Cette dilution de l'air frais par les gaz neutres permet de limiter les émissions d'oxydes d'azote.

Plusieurs solutions existent pour introduire des gaz neutres dans la chambre de combustion d'un cylindre.

Une solution consiste à recycler une partie des gaz brûlés, qui restent dans le cylindre lors de la fin de la phase d'échappement, pour la prochaine phase d'admission. On notera « GBR », les gaz brûlés recirculés. Cette recirculation qui permet le mélange d'une partie des gaz brûlés avec les gaz introduits lors de l'admission s'appelle aussi recirculation interne GBR.

Une autre solution consiste à utiliser une boucle de recirculation partielle des gaz d'échappement pour introduire des gaz brûlés dans le circuit d'admission du moteur. La boucle de recirculation partielle des gaz d'échappement est, de manière générale, appelée boucle EGR, « Exhaust Gas Recirculation » en langue anglaise. Cette boucle EGR est une boucle de recirculation externe au moteur, à la différence de la recirculation interne GBR. Cette boucle EGR est utilisée pour, notamment :

- remplacer une partie de l'air frais entrant dans le moteur par des gaz d'échappement pour diminuer la concentration en oxygène ce qui réduit, pour une température donnée, les émissions de NOx ;
- augmenter la capacité calorifique du mélange par la présence de dioxyde de carbone contenu dans les gaz d'échappement ; ainsi la température de combustion sera plus faible pour une énergie équivalente.

Cependant, les gaz d'échappement étant plus chauds que l'air frais, l'utilisation d'une boucle EGR peut conduire à une augmentation néfaste de la température à l'admission entraînant une diminution de la performance du moteur. Le choix de la valeur du taux d'EGR est donc fonction du compromis entre la réduction des émissions de NOx désirée et l'augmentation des performances du moteur. Le taux d'EGR choisi doit être adapté à chaque condition de charge et de régime de rotation du moteur afin de réduire les oxydes d'azote, les émissions de particules et la perte de rendement du moteur.

Pour réduire les émissions de NOx tout en limitant les émissions de particules, on peut utiliser le concept de combustion HCCI, « Homogeneous Charge Compression Ignition » en langue anglaise ou « allumage par compression d'une charge homogène ». Le mode de combustion HCCI consiste à allumer un mélange air/carburant sans utiliser de bougies d'allumage pour produire une étincelle, mais en le comprimant dans le cylindre jusqu'à ce que la montée de la température de la chambre de combustion puisse l'allumer spontanément par auto-inflammation. Ce concept est, de manière générale, destiné aux moteurs de type diesel qui n'utilisent pas de bougies d'allumage, mais il peut être également adapté à des moteurs de types essence qui utilisent un mélange carburant/air homogène.

En outre, le mode de combustion HCCI utilise un mélange homogène du carburant avec l'air frais ainsi qu'une proportion plus importante d'air par rapport au carburant. Cette répartition homogène du carburant implique que pratiquement tout le carburant présent dans la chambre de combustion du cylindre est enflammé en même temps. Une augmentation de la quantité de carburant brûlé lors de la combustion diminue les émissions de NOx. Pour obtenir un mélange homogène du carburant avec l'air frais, le mode de combustion HCCI nécessite un dosage précis des gaz introduits dans le cylindre.

En combinant la solution du mode HCCI avec une recirculation partielle des gaz brûlés externe EGR ou interne GBR, il convient de connaître précisément le taux des gaz neutres introduits dans le cylindre à chaque cycle de combustion afin de maîtriser le délai d'auto-inflammation du carburant.

Il existe plusieurs méthodes pour contrôler les quantités de gaz introduits dans un cylindre. On peut citer par exemple la demande de brevet français FR 2512496 qui divulgue un procédé pour faire varier le taux de remplissage du cylindre en modifiant les pressions à l'admission et à l'échappement, mais ce procédé est dédié uniquement au contrôle du remplissage du moteur, il ne tient pas compte de la composition en gaz neutres du mélange.

Une autre méthode consiste à utiliser une boucle EGR et à contrôler le taux d'EGR introduit dans les cylindres. Cette solution donne des résultats satisfaisant lors des régimes stabilisés de rotation du moteur. En revanche, lors des phases de transition de régime, par exemple lors du démarrage, des changements de vitesse ou des accélérations, cette solution présente l'inconvénient d'introduire des retards dus au temps de transfert des gaz du circuit d'échappement vers le circuit d'admission. Une mauvaise maîtrise de ces retards, et donc des quantités de gaz neutres introduits dans les cylindres, peut entraîner une augmentation des émissions polluantes et une réduction des performances du moteur.

En outre, lorsqu'on utilise une boucle de recirculation externe EGR avec un mode de combustion HCCI, ces retards dans la maîtrise des quantités de gaz neutres introduits dans les cylindres sont très pénalisants car le mode de combustion HCCI nécessite un dosage précis du taux de gaz neutre pour générer un mélange homogène.

Par ailleurs, on peut contrôler la quantité des gaz introduits dans un cylindre par l'utilisation d'un actionneur de distribution variable. Un actionneur de distribution variable permet de commander l'ouverture et la fermeture des soupapes d'admission et d'échappement des cylindres du moteur à combustion interne.

On peut citer par exemple la demande de brevet français FR 2883331 déposée au nom de la demanderesse qui décrit un procédé pour réaliser une recirculation interne GBR comprenant un dispositif de distribution variable pour piloter l'ouverture et la fermeture des soupapes d'admission et d'échappement afin de modifier la quantité de gaz brûlés GBR. On peut citer également la demande de brevet américain US 2004/0134449 qui divulgue un procédé d'un mode de combustion HCCI pour modifier le temps d'ouverture de la soupape d'admission en fonction du régime de rotation du moteur afin de modifier le temps de l'auto-inflammation du carburant. Mais ces procédés ne comprennent pas de boucle de recirculation externe EGR.

Par ailleurs, on peut citer la demande de brevet internationale WO 2004/076831 qui décrit un système de contrôle d'un mode de combustion HCCI qui comprend un volet d'admission d'air en amont du collecteur d'admission pour contrôler le taux de gaz brûlés GBR. Mais ce système est complexe car il nécessite l'ajout d'un volet dans le circuit d'admission pour contrôler le taux des gaz GBR, ce qui est coûteux et qui ajoute des paramètres de position du volet à mesurer et à commander. On peut en outre citer la demande de brevet américain US 2003/0183202 qui divulgue un système de contrôle du taux des gaz GBR par l'intermédiaire d'un volet d'admission d'air et qui présente les mêmes inconvénients que ceux cités précédemment.

Un des buts de l'invention est donc de contrôler la quantité du mélange des gaz introduits dans le cylindre d'un moteur à combustion interne équipé d'une boucle externe de recirculation partielle des gaz d'échappement, ainsi que la composition de ce mélange.

Un autre but de l'invention est de contrôler la composition du mélange des gaz introduits dans le cylindre en effectuant peu de mesure et avec un nombre réduit d'équipements à commander.

Selon un aspect de l'invention, on propose un système de contrôle d'un groupe motopropulseur de véhicule automobile équipé d'une boucle de recirculation partielle des gaz d'échappement, d'un moteur à combustion interne muni d'au moins un cylindre comprenant au moins une soupape d'admission et au moins une soupape d'échappement commandées par un actionneur de distribution variable.

Ce système comprend un moyen pour réguler un débit d'air frais admis dans le moteur et un moyen de contrôle de la distribution des gaz pour contrôler l'introduction dans le cylindre d'une masse de gaz d'échappement partiellement recyclés et d'un taux de gaz brûlés résiduels à partir des consignes d'entrée de taux de gaz brûlés résiduels, de débit d'air frais et de masse de gaz d'échappement partiellement recyclés.

Ainsi, on peut contrôler la quantité et la composition du mélange des gaz introduits dans un cylindre par une chaîne de commande utilisant une mesure de débit d'air et des consignes d'entrée pour fournir des commandes à deux actionneurs de contrôle, l'actionneur de distribution variable et une vanne de la boucle de recirculation partielle des gaz d'échappement, ou vanne EGR.

En outre, on peut équiper le moteur d'un turbocompresseur à géométrie variable et contrôler la pression du collecteur d'admission par la commande des aubes du turbocompresseur.

Selon un autre mode de réalisation, le moyen de contrôle de la distribution des gaz comprend des moyens pour déterminer une consigne de volume de remplissage d'au moins un cylindre et une consigne de volume des gaz brûlés résiduels à partir desdites consignes d'entrée, un moyen de contrôle d'admission pour élaborer au moins une consigne de commande d'admission à partir de ladite consigne de volume de remplissage et un moyen de contrôle d'échappement pour élaborer au moins une consigne de commande d'échappement à partir de ladite consigne de volume des gaz brûlés résiduels.

Selon encore un autre mode de réalisation, le système comprend un moyen pour mesurer le régime de rotation du moteur, et dans lequel, une cartographie en fonction des valeurs de la consigne de volume de remplissage et des mesures du régime de rotation du moteur permet au moyen de contrôle d'admission d'élaborer la consigne de commande d'admission, et une cartographie en fonction des valeurs de la consigne de volume des gaz brûlés résiduels et des mesures du régime du moteur permet au moyen de contrôle d'échappement d'élaborer la consigne de commande d'échappement.

Selon un autre mode de réalisation, le moyen de contrôle d'échappement est capable d'élaborer une consigne de commande d'ouverture d'au moins une soupape d'échappement pendant l'admission des gaz dans le cylindre.

Selon encore un autre mode de réalisation, au moins un cylindre comprend au moins deux soupapes d'admission, le système comprenant un moyen d'élaboration d'une consigne de différenciation du comportement d'ouverture desdites soupapes d'admission, et le moyen de contrôle d'admission modifie la consigne de volume de remplissage si la consigne de différenciation n'est pas nulle.

Selon un autre aspect de l'invention, on propose un procédé de contrôle d'un groupe motopropulseur de véhicule automobile avec une recirculation partielle des gaz d'échappement.

Dans ce procédé, on régule un débit d'air frais admis dans le moteur, et on contrôle l'introduction dans le cylindre d'une masse de gaz d'échappement partiellement recyclés et d'un taux de gaz brûlés résiduels à partir des consignes d'entrée de taux de gaz brûlés résiduels, de débit d'air frais et de masse de gaz d'échappement partiellement recyclés.

Selon un autre mode de mise en oeuvre, on détermine une consigne de volume de remplissage d'au moins un cylindre du moteur à combustion interne et une consigne de volume des gaz brûlés résiduels à partir desdites consignes d'entrée, on contrôle l'admission des gaz dans au moins un cylindre à partir de ladite consigne de volume de remplissage, et on contrôle l'échappement des gaz depuis au moins un cylindre à partir de ladite consigne de volume de gaz brûlés résiduels.

Selon encore un autre mode de mise en oeuvre, on mesure un régime de rotation du moteur, on élabore au moins une consigne de commande d'admission des gaz dans le cylindre à partir d'une cartographie en fonction des valeurs de la consigne de volume de remplissage et des mesures du régime de rotation du moteur, et on élabore au moins une consigne de commande d'échappement des gaz à partir d'une cartographie en fonction des valeurs de la consigne de volume des gaz brûlés résiduels et des mesures du régime de rotation du moteur.

Selon un autre mode de mise en oeuvre, pour un moteur comportant au moins un cylindre avec au moins une soupape d'échappement, on commande l'ouverture de la soupape d'échappement pendant l'admission des gaz dans le cylindre.

Selon encore un autre mode de mise en oeuvre, pour un moteur comportant au moins un cylindre avec au moins deux soupapes d'admission, on élabore une consigne de différenciation du comportement d'ouverture desdites soupapes d'admission et on modifie la consigne de volume de remplissage si la consigne de différenciation n'est pas nulle.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 représente une vue schématique des différents organes d'un moteur à combustion interne ;
- la figure 2 représente une vue schématique d'un module de contrôle de la distribution des gaz ;
- la figure 3 représente une vue schématique d'un module d'élaboration des consignes de volume ;
- la figure 4 représente une vue schématique d'un autre mode de réalisation du module de contrôle de la distribution des gaz ; et
- la figure 5 est un schéma synoptique des principales étapes d'un procédé conforme à l'invention.

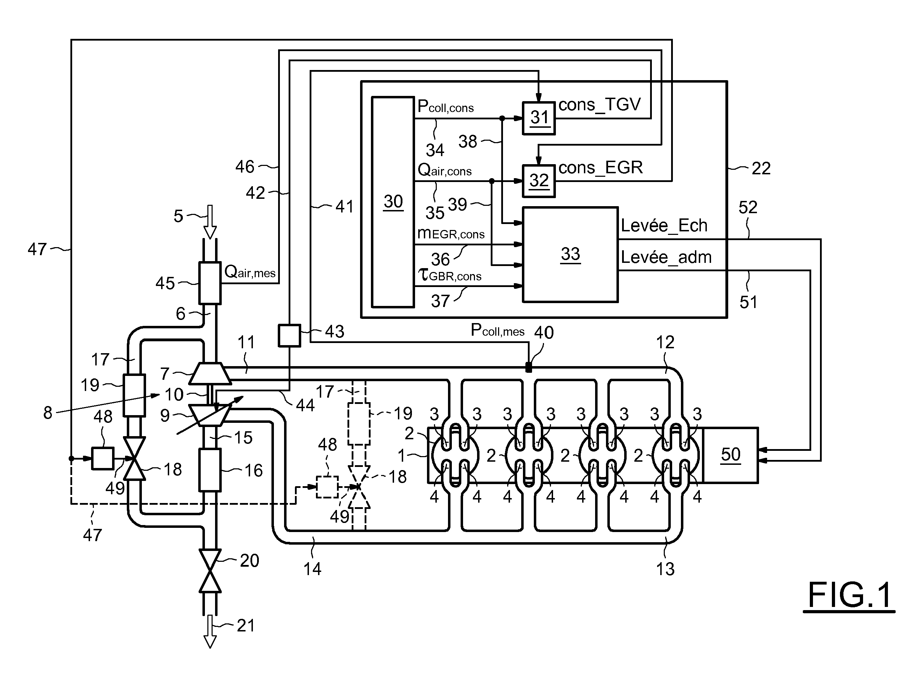

Sur la figure 1 on a représenté une vue schématique des différents organes d'un moteur 1 à combustion interne comprenant quatre cylindres 2. Chaque cylindre comprend au moins une soupape d'admission 3 et au moins une soupape d'échappement 4. L'air frais admis 5 passe par un filtre à air non représenté. Cet air est ensuite dirigé, par un conduit d'admission 6 vers un compresseur 7 d'un turbocompresseur 8. Le turbocompresseur 8 comprend une turbine 9 reliée au compresseur 7 par un axe d'entraînement 10. Le compresseur 7 permet d'augmenter la quantité d'air frais admise dans les cylindres 2. La turbine 9 est à géométrie variable et peut être commandée. L'air ainsi comprimé est dirigé vers un conduit d'admission 11, puis vers un collecteur d'admission 12 des gaz entrant dans le moteur 1.

En sortie du moteur 1, les gaz d'échappement passent successivement par un collecteur d'échappement 13, un conduit 14 des gaz d'échappement, la turbine 9 et une ligne d'échappement 15. Sur la ligne d'échappement 15 est monté un organe 16 de traitement des gaz d'échappement qui peut être un filtre à particules, un système catalytique des gaz d'échappement, ou une association des deux.

En outre, le système comprend une boucle externe 17 de recirculation partielle des gaz d'échappement. Cette boucle externe 17 comprend une vanne 18 de recirculation, ou vanne EGR, et un organe refroidisseur 19 pour refroidir les gaz d'échappement partiellement recirculés, ledit organe refroidisseur 19 peut être équipé d'une dérivation « by-pass » pour un mode non refroidi des gaz d'échappement partiellement recyclés. Dans un mode de réalisation, cette boucle externe de recirculation 17 peut être implémentée entre la sortie de l'organe 16 de traitement des gaz d'échappement et l'amont du compresseur 7, on l'appelle alors « boucle externe de recirculation partielle des gaz d'échappement à basse pression », car celle-ci est placée en aval de la turbine 9. Dans un autre mode de réalisation, cette boucle externe 17 peut être implémentée entre la sortie du collecteur d'échappement 13 et le collecteur d'admission 12 en ayant une extrémité piquée sur le conduit d'échappement 14 et une autre extrémité piquée sur le conduit d'admission 11, on l'appelle alors « boucle externe de recirculation partielle des gaz d'échappement à haute pression », car celle-ci est placée en amont de la turbine 9. Sur la figure 1, on a représenté la boucle externe de recirculation partielle des gaz d'échappement à haute pression en tireté.

La boucle externe de recirculation partielle des gaz d'échappement à haute pression consiste à prélever des gaz en amont de la turbine 9 pour les réinjecter en aval du compresseur 7. Cette recirculation à haute pression présente l'avantage d'être constituée d'un circuit court et offre une grande réactivité du système en diminuant le retard de transfert des gaz du conduit d'échappement 14 vers le conduit d'admission 11. La différence de pression entre le conduit d'échappement 14 et le conduit d'admission 11 est utilisée comme une force motrice pour le transfert de ces gaz. Cependant, la mise en oeuvre d'une telle recirculation conduit à injecter, dans le moteur 1, des gaz contenant des particules, ou suies, et entraîner un encrassement de ce dernier.

La boucle externe de recirculation partielle des gaz d'échappement à basse pression consiste à prélever les gaz d'échappement après la turbine 9 pour les réinjecter en amont du compresseur 7. Afin d'éviter une usure prématurée du compresseur 7, cette recirculation est placée en aval de l'organe 16 de traitement des gaz d'échappement, permettant de recycler une partie des gaz d'échappement sans particules. En outre, une différence de pression entre l'échappement et l'admission faible doit être amplifiée par la mise en place d'un volet 20 de contre pression à l'échappement. Le volet 20 de contre pression est placé sur la ligne d'échappement 15 en aval de la connexion entre la boucle externe 17 et la ligne d'échappement 15 lorsqu'une boucle externe 17 de recirculation des gaz à basse pression est utilisée, il est enlevé du système dans le cas contraire.

Après le passage des gaz d'échappement dans l'organe 16 de traitement, ou dans le volet 20 de contre pression, les gaz 21 sont évacués dans l'atmosphère.

Une unité de commande électronique 22, notée UCE, contrôle le fonctionnement du moteur 1. L'UCE 22 comprend un module 30 d'élaboration de consignes d'entrée pour des modules 31 et 32 de régulation et un module 33 de contrôle de la distribution des gaz.

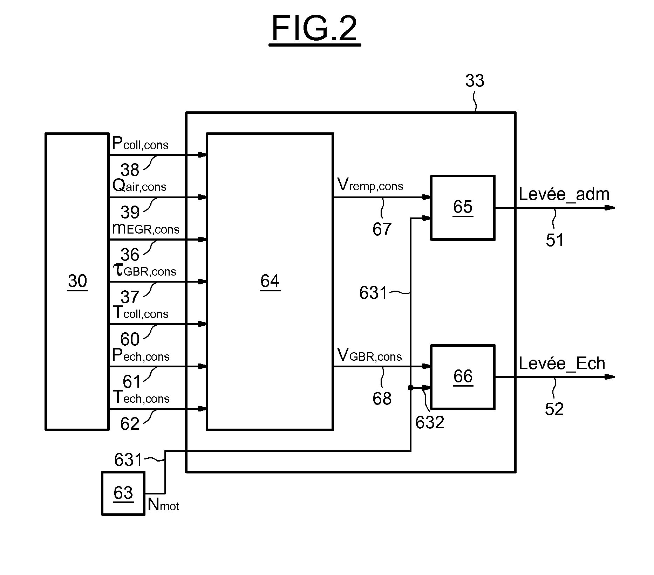

Le module 30, noté également module 30 d'entrée, transmet une consigne $P_{coll,cons}$ de pression du collecteur d'admission, par une connexion 34 en direction du module 31 de régulation, une consigne $Q_{air,cons}$ de débit d'air frais, par une connexion 35 en direction du module 32 de régulation et les consignes $m_{EGR,cons}$ de masse d'EGR, et $\tau_{GER,cons}$ de taux de GBR respectivement par des connexions 36 et 37 en direction du module 33 de contrôle. Le module 30 d'entrée transmet également la consigne $P_{coll,cons}$ de pression du collecteur et la consigne $Q_{air,cons}$ de débit d'air frais respectivement par des connexions 38 et 39 en direction du module 33 de contrôle, ainsi que d'autres consignes d'entrée pour le module 33 qui seront décrites à la figure 2. Le module 30 d'entrée peut élaborer chaque consigne d'entrée à partir de différentes cartographies établies en fonction du régime de rotation du moteur et du débit de carburant.

Le module 31 de régulation permet de réguler la pression courante du collecteur d'admission 12 par une méthode telle que décrite dans la demande de brevet WO 2007/045781 déposée au nom de la demanderesse. Cette méthode consiste à commander une turbine à géométrie variable pour réguler la pression du collecteur d'admission à partir d'une consigne de pression et d'une mesure de la pression du collecteur d'admission. Pour réguler la pression du collecteur d'admission, on utilise un capteur 40, placé dans le collecteur d'admission 12, qui émet une mesure $P_{coll,mes}$ de la pression du collecteur d'admission, transmise par une connexion 41 en direction du module 31 de régulation. Le module 31 de régulation émet une consigne de commande $Cons\_TGV$ par une connexion 42 en direction d'un actionneur 43 de la turbine 9 à géométrie variable. L'actionneur 43 transmet par la connexion 44 une commande en direction de la turbine 9 pour modifier la pression du collecteur d'admission en fonction de la consigne $Cons\_TGV$ reçue. Le module 31 permet d'asservir la pression du collecteur d'admission par rapport à la consigne $P_{coll,cons}$ de pression du collecteur d'admission. Cette pression dans le collecteur d'admission peut être contrôlée indépendamment des valeurs du débit d'air frais, du taux de gaz EGR et du taux de gaz GBR. En outre, la régulation de la pression du collecteur d'admission 12 peut être effectuée en boucle fermée, c'est-à-dire grâce à la mesure de la pression du collecteur d'admission 12 et une correction d'erreur sur la comparaison entre la valeur $P_{coll,cons}$ de la consigne de pression et la valeur $P_{coll,mes}$ de la pression mesurée.

Le module 32 de régulation permet de réguler le débit d'air frais par une méthode telle que décrite dans la demande de brevet FR2886339 déposée au nom de la demanderesse. Cette méthode consiste à commander une vanne EGR pour réguler le débit d'air frais à partir d'une consigne de débit et d'une mesure du débit d'air frais. Pour réguler le débit d'air frais, on utilise un débitmètre 45, placé sur le conduit d'admission 6, qui émet une mesure $Q_{air,mes}$ du débit d'air frais, transmise par une connexion 46 en direction du module 32 de régulation. Le module 32 de régulation émet une consigne de position $Cons\_EGR$ par une connexion 47 en direction d'un actionneur 48 de la vanne EGR 18. L'actionneur 48 transmet par une connexion 49 une commande de position de la vanne EGR 18 en fonction de la consigne $Cons\_EGR$ reçue. Le module 32 permet d'asservir le débit d'air frais par rapport à la consigne $Q_{air,cons}$ de débit d'air frais. En outre, la régulation du débit d'air frais peut être effectuée en boucle fermée, c'est-à-dire grâce à la mesure du débit d'air frais et une correction d'erreur sur la comparaison entre la valeur $Q_{air,cons}$ de la consigne de débit d'air frais et la valeur $Q_{air,mes}$ du débit d'air frais mesuré.

Le module 33 de contrôle de la distribution des gaz permet de contrôler les quantités d'EGR et de GBR admis dans les cylindres 2 par l'envoi de consignes de levée des soupapes 3 et 4 à un actionneur 50 de distribution variable qui permet de commander l'ouverture et la fermeture des soupapes d'admission 3 et d'échappement 4 en fonction des consignes reçues. Le module 33 de contrôle de la distribution des gaz détermine les consignes de levée des soupapes à partir, notamment, des consignes d'entrées $P_{coll,cons}$, $Q_{air,cons}$, $m_{EGR,cons}$ et $\tau_{GBR,cons}$. Il transmet au moins une consigne de levée des soupapes d'admission *Levée_adm* et une consigne de levée des soupapes d'échappement *Levée_Ech* respectivement par les connexions 51 et 52 vers l'actionneur 50 de distribution variable. Le contrôle des quantités d'EGR et de GBR admis dans les cylindres 2 peut être effectué en boucle ouverte, c'est-à-dire grâce à l'envoi de consignes de commande sans mesure de la variable à commander.

Sur la figure 2, on a représenté une vue schématique d'un module 33 de contrôle de la distribution des gaz. Ce module 33 reçoit les consignes $\tau_{GBR,cons}$, $Q_{air,cons}$, $m_{EGR,cons}$ et $P_{coll,cons}$ du module 30 d'entrée comme décrit à la figure 1. Le module 30 d'entrée émet en outre les consignes $T_{coll,cons}$, $P_{ech,cons}$, et $T_{ech,cons}$ respectivement par les connexions 60, 61, et 62 en direction du module 33 de contrôle.

Avec :

- $T_{coll,cons}$ : La consigne de température dans le collecteur d'admission 12 ;
- $P_{ech,cons}$ : La consigne de pression dans le collecteur d'échappement 13 ;
- $T_{ech,cons}$ : La consigne de température dans le collecteur d'échappement 13 ;

Un module 63 de mesure est apte à mesurer la valeur $N_{mot}$ du régime de rotation du moteur 1 et la transmet par les connexions 631 et 632 au module 33 de contrôle.

Le module 33 de contrôle comprend des modules de calcul 64, 65 et 66.

Le module 64 de calcul des volumes permet d'élaborer deux consignes intermédiaires de volume $V_{remp,cons}$ et $V_{GBR,cons}$ en fonction des consignes d'entrée émises par le module 30 d'entrée, pour déterminer les consignes d'ouverture et de fermeture des soupapes d'admission et d'échappement.

- $V_{remp,cons}$ : La consigne de remplissage du cylindre 2 ;
- $V_{GBR,cons}$ : La consigne du volume des gaz brûlés recirculés GBR.

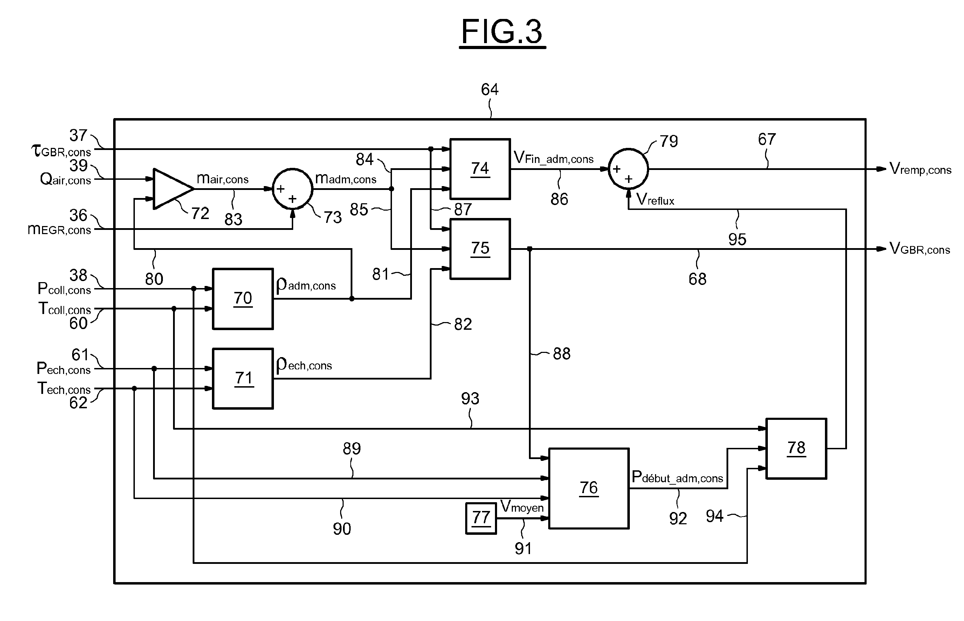

La détermination de ces consignes intermédiaires de volume sera décrite à la figure 3. Le module 64 émet la consigne $V_{remp,cons}$ de volume de remplissage du cylindre 2 par une connexion 67 vers le module 65 de calcul, et émet la consigne $V_{GBR,cons}$ de volume de gaz brûlés GBR par une connexion 68 vers le module 66 de calcul.

Le module de calcul 65, noté également module 65 d'admission, permet d'élaborer la consigne *Levée_*adm de levée des soupapes d'admission, appelée également loi de levée des soupapes d'admission, à partir de la consigne $V_{remp,cons}$ transmise par la connexion 67 depuis le module 64 et de la mesure $N_{mot}$ transmise par la connexion 631 depuis le module 63 de mesure. Le module 65 d'admission utilise une cartographie qui permet d'élaborer la consigne *Levée_adm* pour un volume $V_{remp,cons}$ de remplissage donné et un régime de rotation du moteur $N_{mot}$ donné.

Le module de calcul 66, noté également module 66 d'échappement, permet d'élaborer la consigne *Levée_Ech* de levée des soupapes d'échappement, appelée également loi de levée des soupapes d'échappement, à partir de la consigne $V_{GBR,cons}$ transmise par la connexion 68 depuis le module 64 et de la mesure $N_{mot}$ transmise par la connexion 632 depuis le module 63 de mesure. Le module 66 d'échappement utilise une cartographie qui permet d'élaborer la consigne *Levée_Ech* pour un volume $V_{GBR,cons}$ de gaz brûlés donné et un régime de rotation du moteur $N_{mot}$ donné. Il existe deux modes de commande de l'échappement :

- Le premier mode de commande est dit « mode simple ». Le mode simple correspond à un mode où les soupapes d'échappement se ferment rapidement après la fin de l'échappement. C'est une approche simple qui offre une grande flexibilité pour l'obtention de GBR dans le cylindre. L'inconvénient de ce mode est qu'il permet d'emprisonner des quantités très différentes de gaz brûlés résiduels quelque soit le point de fonctionnement du moteur. L'avantage de ce mode est que la commande est simplement déterminée à partir d'une cartographie en fonction du volume de remplissage et du régime de rotation du moteur.
- Le deuxième mode de commande est dit « mode complexe ».
  Ce mode complexe correspond à un mode qui tient compte de la réouverture possible des soupapes d'échappement 4 pendant la phase d'admission. Dans ce mode complexe, si la consigne *Levée_Ech* ne permet pas de générer le taux de GBR souhaité, la réouverture des soupapes d'échappement 4 en phase d'admission est effectuée pour augmenter le volume de GBR dans la chambre d'admission, et donc de corriger l'écart de taux de GBR.

Sur la figure 3, on a représenté une vue schématique du module 64 de calcul qui élabore les consignes $V_{remp,cons}$ et $V_{GBR,cons}$ intermédiaires de volume.

On notera par la suite :

- $V_{Fin\_adm,cons}$ : Volume des gaz dans le cylindre en fin d'admission ;
- $V_{reflux}$ : Volume des gaz qui refluent depuis la chambre de combustion du cylindre 2 vers le collecteur d'admission 12 lorsque la soupape d'admission s'ouvre pour admettre des gaz dans le cylindre et que la pression dans la chambre d'admission est supérieure à la pression du collecteur d'admission 12 ;

- $m_{air,cons}$ : Consigne de la masse d'air frais calculée à partir de la consigne de débit d'air frais $Q_{air,cons}$ ;
- $m_{adm,cons}$ : Consigne de la masse admise dans le cylindre ;
- $m_{GBR,cons}$ : Consigne de la masse de gaz brûlés recirculés ;
- $m_{Totale,cyl}$ : Masse totale des gaz introduits dans le cylindre ;
- $\rho_{ech,cons}$ : Consigne de masse volumique des gaz d'échappement ;
- $\rho_{adm,cons}$ : Consigne de masse volumique des gaz entrant dans le moteur 1.

On a également les relations (1) et (2) suivante :

$$\tau_{GBR,cons} = \frac{m_{GBR,cons}}{m_{air,cons} + m_{EGR,cons} + m_{GBR,cons}} \tag{1}$$

où :

$$m_{Totale,cyl} = m_{air,cons} + m_{EGR,cons} + m_{GBR,cons} \tag{2}$$

Le module 64 de contrôle comprend des modules 70 à 79 de calcul.

Le module 70 élabore une consigne $\rho_{adm,cons}$ de la masse volumique des gaz admis dans le cylindre 2 à partir de la consigne $P_{coll,cons}$ de pression reçue par la connexion 38 et de la consigne $T_{coll,cons}$ de température reçue par la connexion 60. La consigne $\rho_{adm,cons}$ est calculée suivant l'équation (3) :

$$\rho_{adm,cons} = \frac{P_{coll,cons}}{r \cdot T_{coll,cons}} \tag{3}$$

Avec :

- r : la constante des gaz parfaits.

Le module 70 émet la consigne $\rho_{adm,cons}$ transmise par la connexion 80 en direction du module 72 de conversion. Ce module 70 transmet également la consigne $\rho_{adm,cons}$ par la connexion 81 en direction du module 74.

Le module 71 élabore une consigne $\rho_{ech,cons}$ de la masse volumique des gaz d'échappement à partir de la consigne $P_{ech,cons}$ de pression reçue par la connexion 61 et de la consigne $T_{ech,cons}$ de température reçue par la connexion 62. La consigne $\rho_{ech,cons}$ est calculée suivant l'équation (4) :

$$\rho_{ech,cons} = \frac{P_{ech,cons}}{r \cdot T_{ech,cons}} \tag{4}$$

Le module 71 émet la consigne $\rho_{ech,cons}$ transmise par la connexion 82 en direction du module 75.

Le module 72 de conversion convertit la consigne $Q_{air,cons}$ de débit d'air frais, reçue par la connexion 39, en une consigne $m_{air,cons}$ de masse d'air que ledit module 72 émet par la connexion 83 en direction du module 73 d'addition. Ce module 73 d'addition reçoit également la consigne de masse d'EGR par la connexion 36 et additionne les deux consignes, puis émet le résultat $m_{adm,cons}$ par les connexions 84 et 85 en direction respectivement des modules 74 et 75. On obtient la relation (5) suivante :

$$m_{adm,cons} = m_{air,cons} + m_{EGR,cons} \qquad (5)$$

Le module 74 élabore la consigne de volume en fin d'admission à partir, de la consigne $\tau_{GBR,cons}$ reçue par la connexion 37, la consigne $m_{adm,cons}$ reçue par la connexion 84 et la *consigne* $\rho_{adm,cons}$ reçue par la connexion 81 suivant l'équation (6) :

$$V_{Fin\_adm,cons} = \frac{m_{adm,cons}}{\rho_{adm,cons}(1-\tau_{GBR,cons})} \qquad (6)$$

Le module 74 émet la consigne $V_{Fin\_adm,cons}$, transmise par la connexion 86 vers le module 79 d'addition.
Le module 75 élabore la consigne $V_{GBR,cons}$ de volume de gaz brûlés GBR à partir, de la consigne $\tau_{GBR,cons}$ reçue par une connexion 87 depuis le module 30 d'entrée, la consigne $m_{adm,cons}$ reçue par la connexion 85 et la consigne $\rho_{ech,cons}$ reçue par la connexion 82 suivant l'équation (7) :

$$V_{GBR,cons} = \frac{\tau_{GBR,cons} \cdot m_{adm,cons}}{\rho_{ech,cons}(1-\tau_{GBR,cons})} \qquad (7)$$

Le module 75 émet la consigne $V_{GBR,cons}$, transmise par la connexion 68, en sortie du module 64 vers le module 66. Ce module transmet également la consigne $V_{GBR,cons}$ par une connexion 88 en direction du module 76.
Le module 76 élabore une consigne de pression $P_{début\_adm,cons}$ des gaz dans le cylindre 2 en début d'admission à partir, de la consigne $V_{GBR,cons}$ reçue par la connexion 88, la consigne $P_{ech,cons}$ transmise par une connexion 89 depuis le module 30 d'entrée, la consigne $T_{ech,cons}$ transmise par une connexion 90 depuis le module 30 d'entrée et une valeur $V_{moyen}$ du volume moyen d'un cylindre 2 transmise par une connexion 91 depuis le module 77. La consigne de pression $P_{début\_adm,cons}$ dépend de différents paramètres et en particulier ceux qui sont amenés à l'entrée du module 76, elle peut être calculée en fonction de ces paramètres suivant l'équation (8) :

$$P_{début\_adm,cons} = f(V_{GBR,cons}, P_{ech,cons}, T_{ech,cons} \text{ et } V_{moyen}) \qquad (8)$$

Le module 76 émet la consigne $P_{début\_adm,cons}$, transmise par une connexion 92 vers le module 78.
Le module 78 élabore la variable $V_{reflux}$ à partir, de la consigne $P_{coll,cons}$ reçue par une connexion 94 depuis le module 30 d'entrée, la consigne $P_{début\_adm,con}$ transmise par la connexion 92 et la consigne $T_{coll,cons}$ transmise par une connexion 93 depuis le module 30 d'entrée suivant les équations (9) et (10) :

$$\begin{cases} V_{reflux} = \left( L_e + \frac{l_{cyl}}{2} - \left( \frac{l_{cyl}}{2} \cdot \cos(\theta_T) + \sqrt{L_e^2 - \left( \frac{l_{cyl}}{2} \cdot \sin(\theta_T) \right)^2} \right) \right) \cdot \pi \cdot \left( \frac{A}{2} \right)^2 & (9) \\ \qquad\qquad \text{si } P_{coll,cons} < P_{début\_adm,cons} \\ \\ \text{et } V_{reflux} = 0 \qquad\qquad\qquad\qquad\qquad\qquad\qquad\qquad (10) \\ \qquad\qquad \text{si } P_{coll,cons} \geq P_{début\_adm,cons} \end{cases}$$

Avec :

- *A* : alésage du cylindre 2 ;
- $L_e$ : longueur de la bielle qui pousse le piston dans le cylindre 2 ;
- $l_{cyl}$ : course du cylindre 2 ;
- $\theta_T$ : angle du vilebrequin à partir duquel le reflux à l'admission est terminé, correspondant au début du remplissage en gaz frais, et qui est donné par une cartographie en fonction de la température $T_{coll,cons}$ du collecteur d'admission 12.

En d'autres termes, le volume $V_{reflux}$ est non nul lorsque la pression dans le cylindre 2 au moment de l'ouverture des soupapes d'admission 3 est supérieure à la pression dans le collecteur d'admission 12. Dans le cas contraire, il n'existe pas de reflux des gaz depuis la chambre de combustion du cylindre 2 vers le collecteur d'admission 12 et le volume $V_{reflux}$ est alors nul.

Le module 78 émet la valeur $V_{reflux}$, transmise par une connexion 95 vers le module 79 d'addition.

Le module 79 d'addition élabore la consigne $V_{remp,cons}$ selon l'équation (11) suivante :

$$V_{remp,cons} = V_{Fin\_adm,cons} + V_{reflux} \qquad (11)$$

Le module 79 émet la consigne $V_{remp,cons}$, transmise par la connexion 67, en sortie du module 64 vers le module 65.

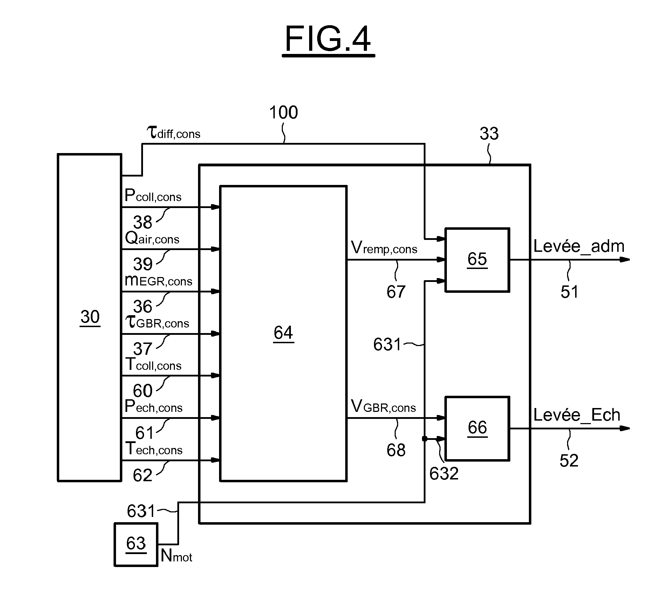

Sur la figure 4 on a représenté une vue schématique d'un autre mode de réalisation de l'invention dans le cas où l'on prend en compte la différenciation de comportement des soupapes d'admission. La figure 4 reprend tous les éléments décrits précédemment à la figure 2. En effet, le cylindre 2 peut comprendre deux soupapes d'admission qui peuvent avoir un comportement différent en intensité d'ouverture. Pour tenir compte de ce degré de liberté supplémentaire, on utilise une consigne $\tau_{diff,cons}$ qui correspond au taux de différentiation d'ouverture des soupapes d'admission. Cette consigne est élaborée par le module 30 d'entrée qui la transmet par la connexion 100 en direction du module 65 d'admission.

Si le taux $\tau_{diff,cons}$ de différentiation est nul, les deux soupapes ont le même comportement et le module 65 d'admission ne modifie pas le système. Dans le cas contraire, si le taux $\tau_{diff,cons}$ de différentiation n'est pas nul, on modifie la valeur de la consigne $V_{remp,cons}$ du volume de remplissage, en ajoutant ou retranchant un volume configurable et en fonction du taux de différentiation.

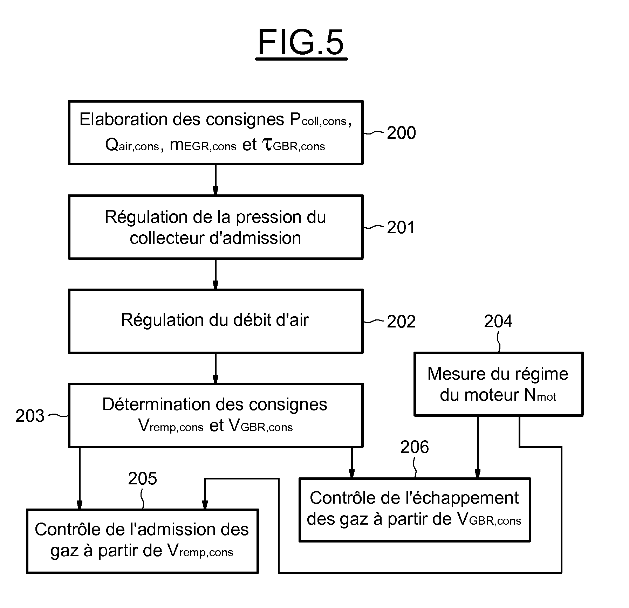

Sur la figure 5, on a représenté un organigramme des étapes d'un procédé conforme à l'invention mis en oeuvre par le dispositif qui vient d'être décrit.

Dans une première étape 200 on élabore des consignes $\tau_{GBR,cons}$, $Q_{air,cons}$, $m_{EGR,cons}$ et $P_{coll,cons}$. Lorsque le moteur à combustion interne est équipé d'un turbocompresseur dont au moins la turbine est à géométrie variable, on effectue une seconde étape 201 ou l'on régule la pression du collecteur d'admission, en aval du compresseur du turbocompresseur, autour de la consigne $P_{coll,cons}$. Puis on effectue l'étape 202 suivante où l'on régule le débit d'air autour de la consigne $Q_{air,cons}$.

A l'étape 203 suivante, on détermine la consigne de volume de remplissage $V_{remp,cons}$ et la consigne de volume de gaz brûlés résiduels $V_{GBR,cons}$ à partir des consignes établies à l'étape 200 précédente.

Dans l'étape 204, on mesure le régime de rotation du moteur *Nmot*.

Puis, on effectue le contrôle de l'admission des gaz 205 à partir d'une cartographie qui permet d'élaborer une consigne de commande d'admission en fonction de la consigne $V_{remp,cons}$ établie à l'étape 203 et de la mesure $N_{mot}$ du régime de rotation du moteur établie à l'étape 204.

On effectue également le contrôle de l'échappement des gaz 206 à partir d'une cartographie qui permet d'élaborer une consigne de commande d'échappement en fonction de la consigne $V_{GBR,cons}$ établie à l'étape 203 et de la mesure $N_{mot}$ du régime de rotation du moteur établie à l'étape 204.

Avantageusement, le contrôle du taux d'EGR et du taux de GBR s'effectue en boucle ouverte, c'est-à-dire sans effectuer des mesures de ces variables. Dans le cas d'un contrôle en boucle ouverte, il n'y a donc pas de comparaison entre les mesures des variables et les valeurs de consigne utilisées pour le contrôle de ces variables. En d'autres termes, le contrôle du taux d'EGR et du taux de GBR est plus rapide qu'une régulation en boucle fermée et permet de mieux compenser les retards lors du transfert des EGR et un contrôle plus rapide du taux de GBR.

Néanmoins, le contrôle du taux d'EGR et du taux de GBR pourrait être effectué en boucle fermée à condition de pouvoir disposer d'une mesure du taux d'EGR et du taux de GBR dans le cylindre. L'avantage de l'utilisation d'une boucle fermée étant d'obtenir une régulation plus précise des valeurs mesurées autour des valeurs de consignes.

Grâce à un système de pilotage de la vanne EGR, de la turbine à géométrie variable et de l'actionneur de distribution variable, il est possible de contrôler simultanément quatre variables prépondérantes dans le fonctionnement d'un moteur : la pression de suralimentation, le débit d'air frais entrant, le taux d'EGR à basse pression et le taux de GBR dans le cylindre.

La maîtrise de ces variables permet avantageusement de déterminer le meilleur compromis entre les performances du moteur et les émissions polluantes.

**Revendications**

1. Système de contrôle d'un groupe motopropulseur de véhicule automobile équipé d'une boucle (17) de recirculation partielle des gaz d'échappement, d'un moteur (1) à combustion interne muni d'au moins un cylindre (2) comprenant au moins une soupape (3) d'admission et au moins une soupape (4) d'échappement commandées par un actionneur (50) de distribution variable et un moyen (32) pour réguler un débit d'air frais admis dans le moteur, **caractérisé en ce qu'**il comprend un moyen (33) de contrôle de la distribution des gaz pour contrôler l'introduction dans le cylindre d'une masse de gaz d'échappement partiellement recyclés et d'un taux de gaz brûlés résiduels à partir des consignes d'entrée de taux de gaz brûlés résiduels, de débit d'air frais et de masse de gaz d'échappement partiellement recyclés.

2. Système selon la revendication 1, dans lequel le moyen (33) de contrôle de la distribution des gaz comprend des moyens pour déterminer une consigne de volume de remplissage d'au moins un cylindre (2) et une consigne de volume des gaz brûlés résiduels à partir desdites consignes d'entrée, un moyen (65) de contrôle d'admission pour élaborer au moins une consigne de commande d'admission à partir de ladite consigne de volume de remplissage et un moyen (66) de contrôle d'échappement pour élaborer au moins une consigne de commande d'échappement à partir de ladite consigne de volume des gaz brûlés résiduels.

3. Système selon la revendication 2, comprenant un moyen (63) pour mesurer le régime de rotation du moteur, et dans lequel, une cartographie en fonction des valeurs de la consigne de volume de remplissage et des mesures du régime de rotation du moteur permet au moyen (65) de contrôle d'admission d'élaborer la consigne de commande d'admission, et une cartographie en fonction des valeurs de la consigne de volume des gaz brûlés résiduels et des mesures du régime du moteur permet au moyen (66) de contrôle d'échappement d'élaborer la consigne de commande d'échappement.

4. Système selon l'une des revendications 2 et 3, dans lequel le moyen (66) de contrôle d'échappement est capable d'élaborer une consigne de commande d'ouverture d'au moins une soupape (4) d'échappement pendant l'admission des gaz dans le cylindre (2).

5. Système selon l'une des revendications 2 à 4, dans lequel au moins un cylindre (2) comprend au moins deux soupapes (3) d'admission, le système comprenant un moyen (30) d'élaboration d'une consigne de différenciation du comportement d'ouverture desdites soupapes d'admission, et le moyen (65) de contrôle d'admission modifie la consigne de volume de remplissage si la consigne de différenciation n'est pas nulle.

6. Procédé de contrôle d'un groupe motopropulseur de véhicule automobile avec une recirculation partielle des gaz d'échappement, dans lequel on régule un débit d'air frais admis dans le moteur, **caractérisé en ce qu'**on contrôle l'introduction dans le cylindre d'une masse de gaz d'échappement partiellement recyclés et d'un taux de gaz brûlés résiduels à partir des consignes d'entrée de taux de gaz brûlés résiduels, de débit d'air frais et de masse de gaz d'échappement partiellement recyclés.

7. Procédé selon la revendication 6, dans lequel on détermine une consigne de volume de remplissage d'au moins un cylindre du moteur à combustion interne et une consigne de volume des gaz brûlés résiduels à partir desdites consignes d'entrée, on contrôle l'admission des gaz dans au moins un cylindre à partir de ladite consigne de volume de remplissage, et on contrôle l'échappement des gaz depuis au moins un cylindre à partir de ladite consigne de volume de gaz brûlés résiduels.

8. Procédé selon la revendication 7, dans lequel on mesure un régime de rotation du moteur, on élabore au moins une consigne de commande d'admission des gaz dans le cylindre à partir d'une cartographie en fonction des valeurs de la consigne de volume de remplissage et des mesures du régime de rotation du moteur, et on élabore au moins une consigne de commande d'échappement des gaz à partir d'une cartographie en fonction des valeurs de la consigne de volume des gaz brûlés résiduels et des mesures du régime de rotation du moteur.

9. Procédé selon l'une des revendications 7 et 8, pour un moteur comportant au moins un cylindre avec au moins une soupape d'échappement, on commande l'ouverture de la soupape d'échappement pendant l'admission des gaz dans le cylindre.

**10.** Procédé selon l'une des revendications 7 à 9, pour un moteur comportant au moins un cylindre avec au moins deux soupapes d'admission, dans lequel on élabore une consigne de différenciation du comportement d'ouverture desdites soupapes d'admission et on modifie la consigne de volume de remplissage si la consigne de différenciation n'est pas nulle.

FIG.1

FIG.2

# FIG.3

EP 2 243 943 A1

FIG.4

# FIG.5

```
┌─────────────────────────────────┐
│ Elaboration des consignes $P_{coll,cons}$, │ ⟜ 200
│ $Q_{air,cons}$, $m_{EGR,cons}$ et $\tau_{GBR,cons}$ │
└─────────────────────────────────┘
              │
              ▼
┌─────────────────────────────────┐
│ Régulation de la pression du    │ ⟜ 201
│ collecteur d'admission           │
└─────────────────────────────────┘
              │
              ▼
┌─────────────────────────────────┐
│ Régulation du débit d'air        │ ⟜ 202
└─────────────────────────────────┘
```

$P_{coll,cons}$, $Q_{air,cons}$, $m_{EGR,cons}$ et $\tau_{GBR,cons}$ — 200

Régulation de la pression du collecteur d'admission — 201

Régulation du débit d'air — 202

204

Mesure du régime du moteur $N_{mot}$

203 — Détermination des consignes $V_{remp,cons}$ et $V_{GBR,cons}$

206

205

Contrôle de l'admission des gaz à partir de $V_{remp,cons}$

Contrôle de l'échappement des gaz à partir de $V_{GBR,cons}$

Europäisches
Patentamt

European
Patent Office

Office européen
des brevets

**RAPPORT DE RECHERCHE EUROPEENNE**

Numéro de la demande

EP 10 30 5389

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2007/074707 A1 (OGAWA KEN [JP] ET AL) 5 avril 2007 (2007-04-05) | 1,6 | INV. F02D41/00 |
| A | * alinéas [0025], [0033] - [0041], [0089], [0095], [0128], [0134], [0136], [0140], [0151], [0157] - [0163], [0173] - [0182] * * alinéa [0219]; revendication 1 * * figures 1,2,11,12,17,22 * | 2-4,7-9 | F02D13/02 F02M25/07 |
| | ----- | | |
| X | US 2005/056265 A1 (CENTER MARC BRYAN [US]) 17 mars 2005 (2005-03-17) * alinéas [0017] - [0022] * * figures 2,3 * | 1,6 | |
| | ----- | | |
| X | EP 1 063 407 A (HITACHI LTD [JP]) 27 décembre 2000 (2000-12-27) * alinéas [0020], [0022], [0023], [0034] - [0040] * * figures 1,11-17 * | 1,6 | |
| | ----- | | |

DOMAINES TECHNIQUES RECHERCHES (IPC)

F02D
F02M

Le présent rapport a été établi pour toutes les revendications

| Lieu de la recherche | Date d'achèvement de la recherche | Examinateur |
|---|---|---|
| Munich | 25 juin 2010 | Mallo López, Manuel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

EP 2 243 943 A1

**ANNEXE AU RAPPORT DE RECHERCHE EUROPEENNE**
**RELATIF A LA DEMANDE DE BREVET EUROPEEN NO.**

EP 10 30 5389

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

25-06-2010

| Document brevet cité au rapport de recherche | Date de publication | Membre(s) de la famille de brevet(s) | Date de publication |
|---|---|---|---|
| US 2007074707 A1 | 05-04-2007 | EP 1770265 A2 | 04-04-2007 |
| US 2005056265 A1 | 17-03-2005 | DE 102004044993 A1 | 28-04-2005 |
| EP 1063407 A | 27-12-2000 | WO 9947800 A1 | 23-09-1999 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2512496
- FR 2883331
- US 20040134449 A
- WO 2004076831 A
- US 20030183202 A
- WO 2007045781 A
- FR 2886339